# EUROPEAN PATENT APPLICATION

(11) **EP 2 071 447 A2**
(43) Date of publication of application: **17.06.2009**
(21) Application number: 08020894.5
(22) Date of filing: 02.12.2008
(51) Int. Cl.: G06F 3/06

(54) **Storage apparatus, storage system and path information setting method**

(30) Priority: 04.12.2007 JP 2007313562
(71) Applicant: Hitachi Ltd., Chiyoda-ku Tokyo 100-8280 (JP)
(72) Inventor: Takayama, Satoru, Tokyo 100-8220 (JP); Tamura, Keishi, Tokyo 100-8220 (JP)
(74) Representative: Beetz & Partner

(57) **Abstract**

A logical port (L1), which is obtained by integrating switch ports in a switch (16) and storage ports in a storage (20), and an access path group connecting the switch port in the switch (16) to the logical device (46) in the storage (29) are associated with each other, and information indicating that the entrance of the logical port (L1) serves as the entrance of access for a host computer (10) is provided to the host computer (10).

## Description

### Cross-references to Related Applications

This application relates to and claims priority from Japanese Patent Application No. 2007-313562, filed on December 4, 2007, the entire disclosure of which is incorporated herein by reference.

### Background

### Field of the Invention

The invention relates generally to a storage apparatus for storing data exchanged between the storage apparatus and a host computer (host system) in a hard disk drive (HDD), a storage system and a path information setting method.

### Description of Related Art

Of storage apparatuses of the above type, a storage apparatus including a storage device for storing information, a plurality of physical ports connected to a host computer via a communication network and serving as an interface for a logical unit in the storage device, and a storage control unit for controlling data read and data write relative to the storage device is well known.

Since the storage apparatus includes a plurality of physical ports, the storage apparatus cannot write data to or read data from each logical device (logical unit) unless paths are defined from the physical ports respectively to the logical devices (logical unit). Accordingly, path definition information indicating control information for accurately transferring information from the host computer to the logical devices has been set for all of the physical ports in the storage apparatus.

In other words, in storage apparatuses, redundancy is an important factor for enhancing reliability, so the path definition information has been set for an access path group that connects the physical ports in the storage apparatus respectively to the logical devices so that access can be made to a common logical device using two or more physical ports.

Meanwhile, a configuration has been proposed in which plural host computers that can access a storage apparatus are grouped with duplication permitted, one or more logical units are assigned to each group, and the assigned logical unit(s) and storage areas in a storage device are associated with each other with duplication permitted, so that security functions for each logical unit assigned in each group (see, for example, 2003-30053 A).

A storage subsystem disclosed in the above reference is provided with a function that extracts, from a command that has accessed the subsystem via a port, information for identifying the host computer that has transmitted the command; determines that the relevant host computer is a part of the grouped computers and permits the access to the relevant assigned logical unit when the extracted identification information is included in a management table; or determines that the relevant host computer is not a part of the grouped computers and denies the access to the accessible logical unit when the identification information is not included in the management table.

In conventional storage apparatuses, paths need to be set for all physical ports, so making settings for path definition information has been complicated and there has been a possibility that a maintenance error may occur when setting for the path definition information.

### Summary

This invention was made in light of the above problems in the conventional technology, and it is an object of this invention to provide a storage apparatus, a storage system and a path setting method that are capable of simplifying the setting of path definition information for accurately transferring information from a host computer to a logical unit in a storage device.

In order to achieve the above object, in this invention, a plurality of physical ports provided in a storage apparatus is logically integrated into a single logical port and path definition information is set for this logical port so that information can be accurately transferred from a host computer to a logical unit in a storage device, and this invention can simplify operation for setting the path definition information.

In addition, access paths from a switch having a plurality of switch ports to a logical unit in the storage device is integrated into one logical access path and the port of this logical access path is provided to the host computer as a logical port, thereby simplifying operation for setting or managing the access paths for the host computer.

According to this invention, management and operation for setting the path definition information can be simplified.

Other aspects and advantages of the invention will be apparent from the following description and the appended claims.

### Brief Description of the Drawings

Fig. 1 is a block configuration diagram showing a storage system according to an embodiment of this invention.

Fig. 2 is a configuration diagram showing access paths connecting a host computer and a storage device.

Fig. 3 is a conceptual diagram showing how a plurality of physical ports is integrated into a single logical port in a storage apparatus.

Fig. 4 is a diagram showing access paths when the host computer and a plurality of storage apparatuses are connected to each other.

Fig. 5 is a configuration diagram showing a path definition information table.

Fig. 6 is a diagram showing an example of a screen displayed when path definition is performed.

Fig. 7 is a flowchart explaining path definition processing.

Fig. 8 is a diagram showing an example of a screen displaying path definition information.

Fig. 9 is a diagram showing an example of a screen displaying the path definition information.

Fig. 10 is a diagram explaining a transmission method for the path definition information.

Fig. 11 is a time chart showing a first example of the path definition processing.

Fig. 12 is a time chart showing a second example of the path definition processing.

Fig. 13 is a time chart showing a third example of the path definition processing.

Fig. 14 is a time chart showing a fourth example of the path definition processing.

Fig. 15 is a time chart explaining data read/data write processing.

Fig. 16 is a time chart explaining I/O control processing.

### Detailed Description of Preferred Embodiments

In this invention, information can be accurately transferred from a host computer to a logical unit in a storage device by logically integrating a plurality of physical ports provided in a storage apparatus into a single logical port and setting path definition information for this logical port. In addition, access paths from a switch having a plurality of switch ports to the logical unit in the storage device is integrated into a logical access path and the entrance of this logical access path is provided to the host computer as a logical port.

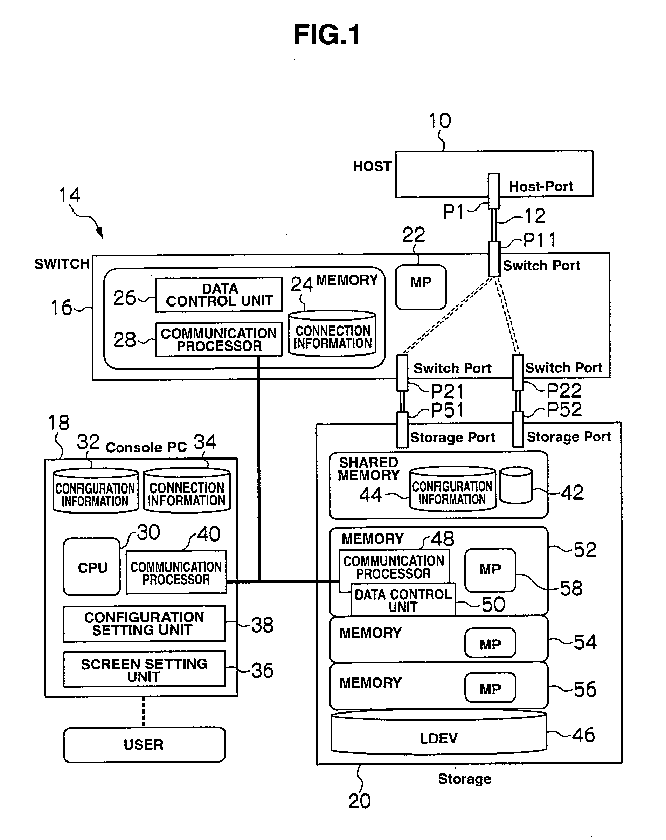

An embodiment of this invention will be described with reference to the attached drawings. Fig. 1 is a block configuration showing a storage system according to the above embodiment of this invention. In Fig. 1, the storage system includes a host computer (host system) 10, and the host computer 10 is connected to a storage apparatus 14 via a communication network 12 such as a SAN (Storage Area Network) and a LAN (Local Area Network).

The storage apparatus 14 includes, as a sub storage system, a switch 16, a management terminal 18 and a storage device 20. The switch 16 includes switch ports P11, P21 and P22, and also includes: a microprocessor 22 that is a controller for forming a path group connecting the switch ports to each other and controlling the connection between the paths; a memory 24 that stores data of various types and connection information; a data control unit 26; and a communication control unit 28. The switch port P11 is connected to a host port P1 in the host computer 10 via the communication network 12. In other words, the switch 16 serves as an apparatus for exchanging I/O data via ports between the host computer 10 and the storage device 20 (.

The management terminal 18 serves as a service processor (SVP) for setting configuration information for the switch 16 and the storage device 20, and includes a microprocessor 30 serving as a controller, a memory 32 storing the configuration information, a memory 34 for storing connection information, a setting screen 36 that serves as a display unit, a configuration setting unit 38 for setting the configuration information, and a communication processor 40 for exchanging information with the switch 16 or the storage device 20.

The storage device 20 includes storage ports (physical ports) P51 and P52, and also includes, as apparatuses employing a RAID (Redundant Arrays of Inexpensive Disks), a shared memory 42 for storing the connection information; a shared memory 44 for storing the configuration information; a logical device 46 (LDEV) serving as a storage device for storing information of various types; a communication processor 48 for exchanging information with the switch 16 or the management terminal 18; a data control unit 50 for controlling data-write to the logical device 46 and data-read from the logical device 46; memories 52, 54 and 56 for storing data relating to control; and a microprocessor 58 for integrally managing the components and performing various types of control. The storage port P 51 is connected to the switch port P21 and the storage port P52 is connected to the switch port P22. Here, the logical device 46 includes a plurality of logical devices.

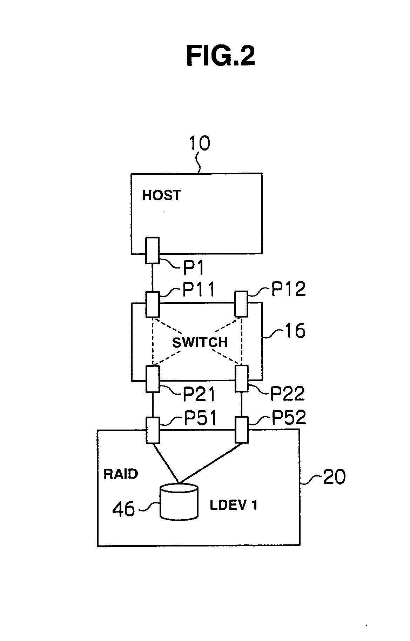

Next, Fig. 2 shows access paths connecting the host computer 10 and the logical device (logical unit) 46 in the storage device 20 to each other. A plurality of physical access paths is provided for connecting the host port P11 in the host computer 10 and the logical device 46 in the storage device 20, and the number of physical access paths depends on the path configuration of the switch 16 and the number of storage ports in the storage device 20.

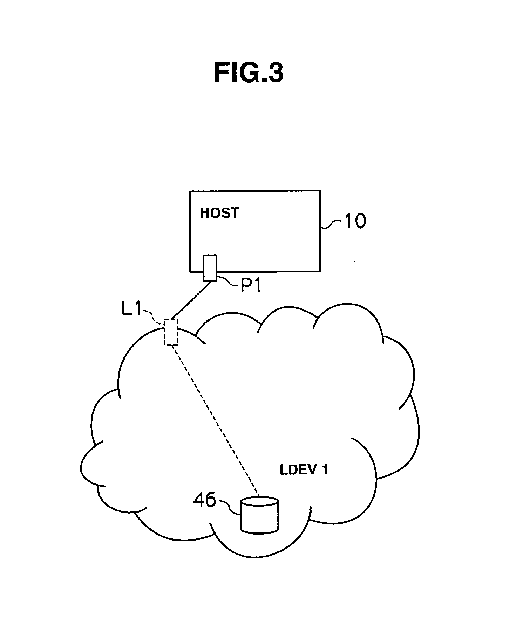

In this configuration, setting path definition information for each of the plurality of access paths is cumbersome. In this embodiment, the management terminal 18 is used as a setting apparatus and a user operates the management terminal 18 to associate an access path group connecting the switch port P11 in the switch 16 and the logical device 46 in the storage device 20 to each other with a logical port L1 that is formed by logically integrating the switch ports and storage ports into a single port, and information indicating that this logical port L1 is an entrance for the access path for the host computer 10 is provided to the host computer 10 as shown in Fig. 3. Accordingly, by setting the path definition information only for the single logical port L1 instead of for each of the plurality of physical ports, management and operation for setting path definition information can be simplified, and in addition, the incidence of errors during maintenance can be reduced.

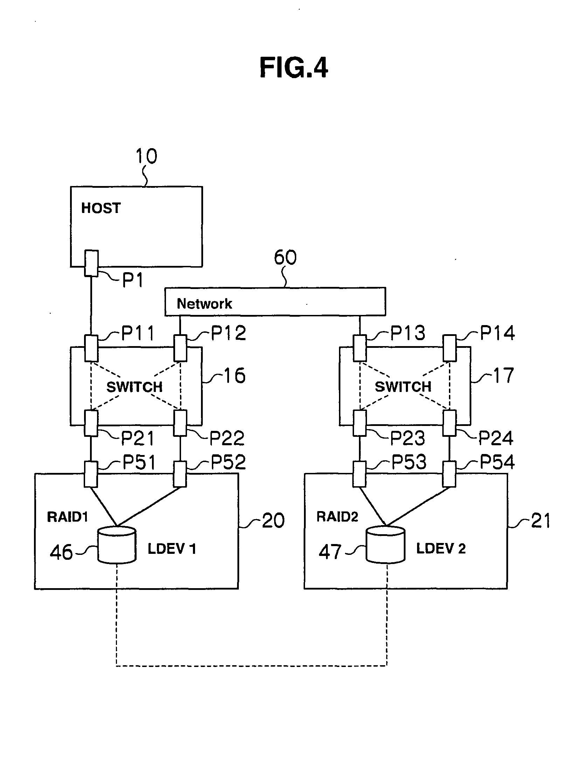

Also, in a configuration shown in Fig. 4, in which a storage device 21 constituting RAID 2 is provided in addition to the storage device 20 constituting RAID 1 to duplicate the storage devices and the storage device 21 is connected to the switch 16 via a switch 17 and a network 60, a single logical port L1 can be set for the access path group connecting the host computer 10 and the logical device 46 to each other and an access path group for connecting the host computer 10 and a logical device 47 in the storage device 21 to each other, using the management terminal 18 as a setting apparatus. Alternatively, the single logical port L1 may be set for the access path group connecting the host computer 10 and the logical device 46 to each other, while another single logical port L2 may be set for the access path group connecting the host computer 10 and the logical device 47 to each other.

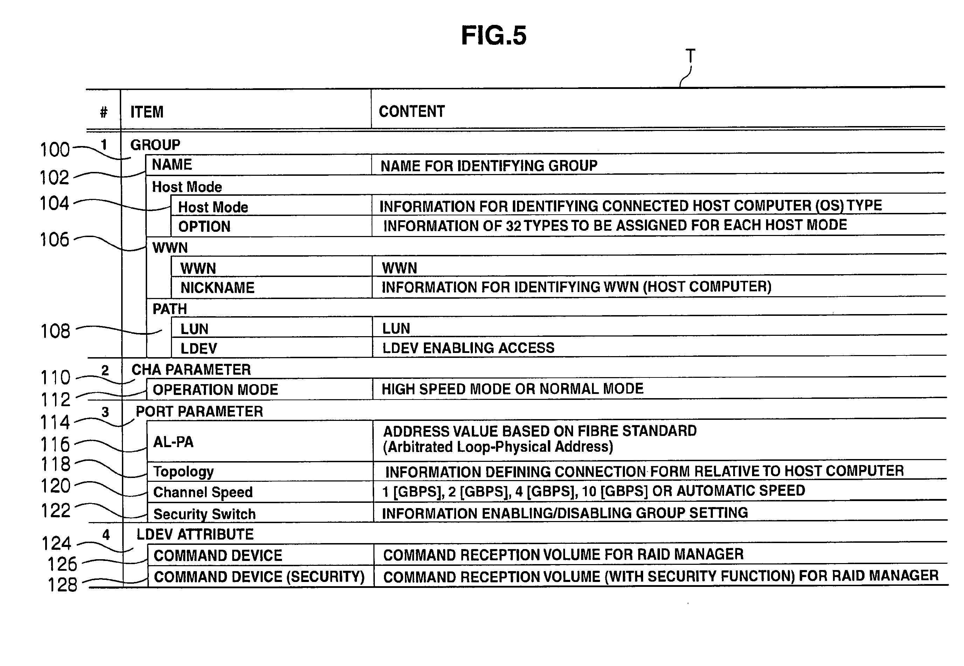

When the path definition information is set by the user using the management terminal18 the path definition information table T shown in Fig. 5 is used. The path definition information table T stored in the management terminal 18 is consists of, for example, four items. The first item is referred to as a group 100, which includes information regarding: a name 102 for identifying a group; a host mode 104 for identifying the type of connected host computer; a WWN (World Wide Name) 106 for identifying the host computer 10; and a bus 108. The host mode 104 optionally stores information of 32 types assigned to each host mode, the WWN 106 stores information regarding a nickname as the information for identifying the host computer, and the bus 108 stores information regarding a logical unit number (LUN) and accessible logical devices.

A second item is a channel adapter parameter 110, and information regarding whether or not high-speed mode or normal mode is selected is stored as the operation mode 112. The third item is a port parameter 114, and an address value based on a fibre standard is stored as the AL-PA 16, information defining the mode of connection with the host computer is stored as the Topology 118, information about which speed -1 (Gpbs), 2 (Gpbs), 4 (Gpbs), 10, (Gpbs) or automatic speed - is selected is stored as the channel speed 120, and information regarding whether to enable or disable a group setting is stored as information regarding a security switch 122.

Stored as a fourth item is information regarding a logical device attribute 124. For example, information regarding a command reception volume in a RAID manager is stored as information regarding a command device 126, and information regarding a command reception volume (with a security function) in the RAID manager is stored as a command device (security) 128.

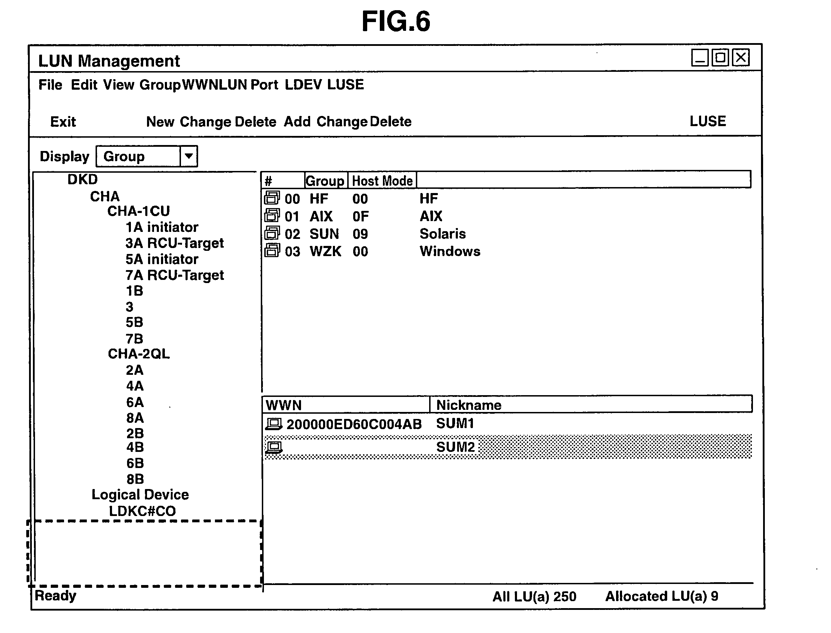

Next, when the user inputs path definition information via the management terminal 18, information about configurations for the storage apparatus 14 is displayed on a screen in the setting screen unit 36, as shown in Fig. 6.

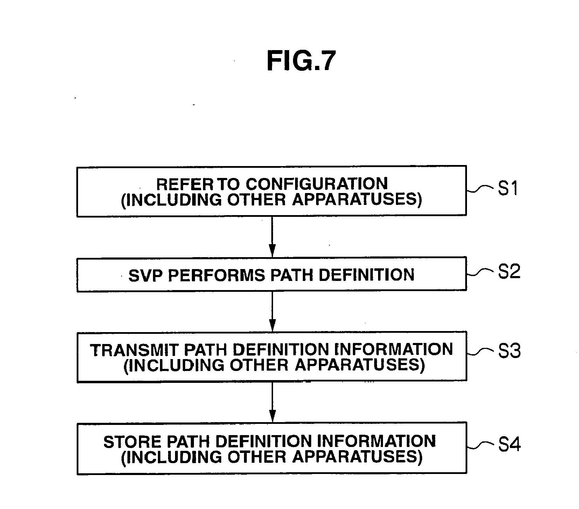

At this time, as shown in Fig. 7, the management terminal 18 exchanges information with the switch 16 and the storage device 20 via the communication processor 40, and performs processing for referring to the configuration information of the storage apparatus 14 (S1). Then the management terminal 18 performs an operation for inputting the path definition information based on the user's input (S2).

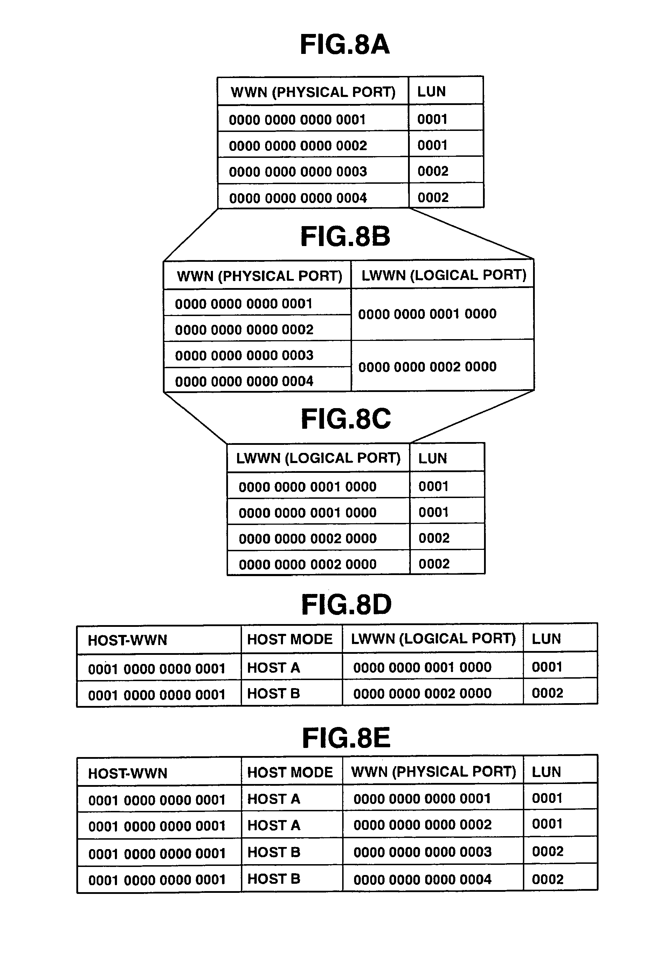

As shown in part (a) in Fig. 8, the path definition information is displayed on the screen of the management terminal 18. For example, suppose the storage ports P51 to P54 correspond respectively to "0...1" to "0...4," they are associated with logical unit numbers (LUN) ("0001" and "0002") of the logical device 46. When the plurality of storage ports (physical ports) is integrated into a single port and then the user designates a single access path and sets a name for the logical port, the configuration information shown in part (b) in Fig. 8 is displayed on the screen.

When access paths with a common logical unit number (LUN) are designated, the access paths from a plurality of physical ports (storage ports) to the common logical unit number (LUN) are designated, and the configuration information shown in part (c) in Fig. 8 is displayed on the screen.

Next, as shown in part (d) in Fig. 8, information about the HOST-WWN and about the host mode 104 are set for each logical port LWWN based on the user's input.

Then, as shown in part (e) in Fig. 8, the HOST-WWN and the host mode set in part (d) in Fig. 8 are set for each original physical port based on the relationship applied when integrating the physical ports for defining the access paths in part (b) in Fig. 8 (. In other words, with the host computer 10 being defined as a host A and another host computer being defined as a host B, the logical unit number LUN "0001" is associated with and assigned to the host A, while the logical unit number LUN "0002" is associated with and assigned to the host B.

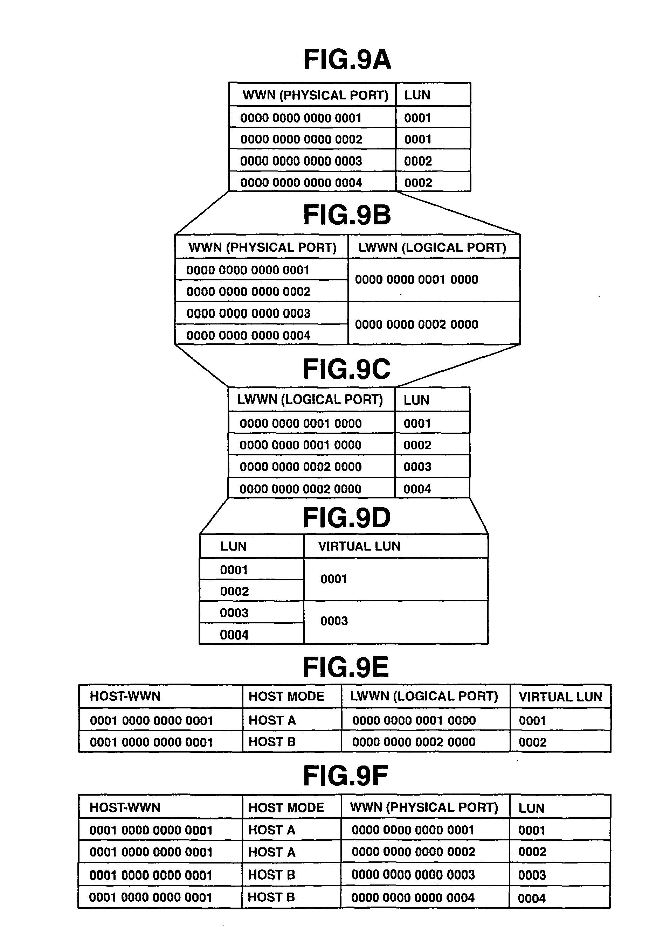

Next, when virtual logical units are set for different logical devices, processing proceeds as follows. When path definition information is displayed on the screen of the management terminal 18 based on the user's input and then access paths desired to be integrated into a single path for a plurality of physical ports are designatedas shown in part (a) in Fig. 9, a screen as shown in part (b) in Fig. 9 is displayed. Here, when the user sets names for the logical ports, if access paths for a common logical unit number (LUN) are designated as shown in part (c) in Fig. 9, it means that the access paths from a plurality of physical ports to the common logical unit number (LUN) are designated. Here, access paths for different logical unit numbers may alternatively be designated.

When a virtual logical unit number is set for different logical unit numbers, the screen shown in part (d) in Fig. 9 is displayed. Here, the virtual logical unit number "0001" is set for the logical unit numbers "0001" and "0002," and the virtual logical unit number "0003" is set for the logical unit numbers "0003" and "0004."

Next, when the Host-WWN and the host mode are set for each logical port, the screen shown in part (e) in Fig. 9 is displayed. In this case, with the host computer 10 being defined as host A and another host computer being defined as host B, a virtual logical unit number "0001" is set for host A, while a virtual logical unit number "0002" is set for host B.

The screen shown in part (f) in Fig. 9 is shown as a result of the above operations, and the HOST-WWN and the host mode set in part (e) in Fig. 9 are set for each original physical port based on the relationship applied when setting the access paths in part (b) and (d) in Fig. 9. In short, a physical unit and a logical unit number are associated and set for each of the host A and the host B.

When the path definition information is set, the management terminal 18 and the logical device connected to the management terminal 18 is displayed on the screen. Then when setting permission (OK) is input for the displayed information, the entrance of the selected access path is defined as a logical port and manipulation for setting this logical port as an access path entrance for the host computer 10 is performed.

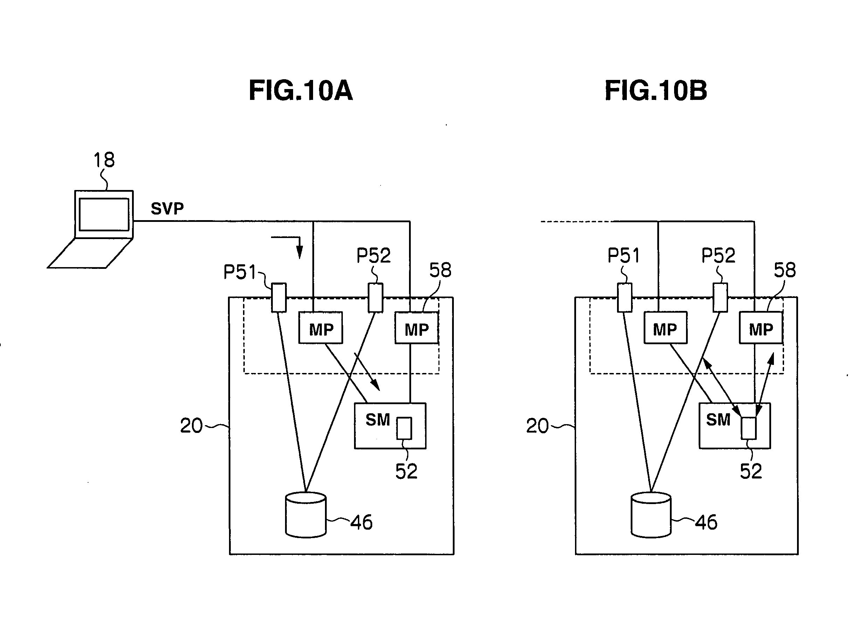

When the setting for the path definition information is completed in the management terminal 18, manipulation for transmitting the path definition information from the management terminal 18 to the storage device 20 is performed (S3). Specifically, as shown in part (a) in Fig. 10, the path definition information is transmitted from the management terminal 18 to the storage device 20, and the path definition information is stored in the memory 52 by the microprocessor 58 (S4).

Then as shown in part (b) in Fig. 9, the microprocessor 58 accesses the memory 52 to acquire the path definition information and transmits the path definition information to the host computer 10 via the switch 16, thereby providing to the host computer 10 the information indicating that the logical port set in the management terminal 18 is the entrance for the host computer 10.

As described above, when the user's manipulation for setting the path definition information is performed in the management terminal 18, an access path group for connecting each physical port and the logical device (logical unit) is displayed on the screen of the management terminal 18.

Here, if, as input information resulted from the user's manipulation, one access path in the access path group displayed on the screen is designated and a logical port name is input for the designated access path in the management terminal 18, the microprocessor 30 in the management terminal 18 judges sameness - whether or not an access path for the logical device the same as the logical device connected to the designated access path has been selected - and displays, only when the judgment result shows that the selected access path is the same, the selected path and the logical device connected thereto. Then when the setting permission (OK) is input for the displayed information, the entrance of the selected access path is set as the logical port L1.

As a result of the above setting, information indicating that the logical port L1 serves as the access path entrance for the host computer 10 is provided to the host computer 10. Accordingly, by setting the path definition information only for the single logical port L1 without the need for setting the path definition information for the plurality of physical ports, the management and the operation accompanying the path definition information setting can be simplified and the incidence of maintenance errors can be reduced.

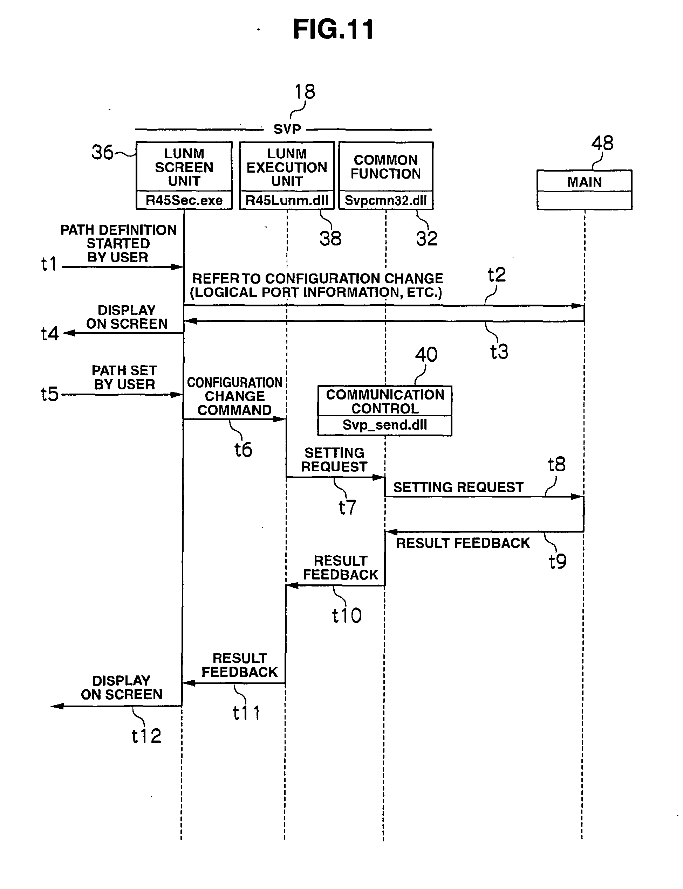

Next, path definition processing between the management terminal 18 and the storage device 20 will be described below based on the time chart shown in Fig. 11. First, when path definition is started by the user's manipulation at time t1, the management terminal 18 refers to the communication processor 48 in the storage device 20 for configuration change (logical port information), based on the processing in the microprocessor (controller) 30, at time t2. When the information from the storage device 20 is transmitted back to the management terminal 18 at time t3, the content of this information is displayed on the screen of the management terminal 18 at time t4.

Next, when the user performs path setting at time t5, a configuration change command is output from the screen setting unit 36 to the configuration setting unit 38 at time t6, a setting request is output from the configuration setting unit 38 to the communication processor 40 at time t7, and the setting request is output from the communication processor 40 to the storage device 20 at time t8. When the processing result is transmitted back from the storage device 20 to the communication processor 40 at time t9, this result is transmitted from the communication processor 40 to the configuration setting unit 38 at time t10. Then when the result is transmitted from the configuration setting unit 38 to the setting screen 36 at time t11, the result is displayed on the screen of the management terminal 18 at time t12.

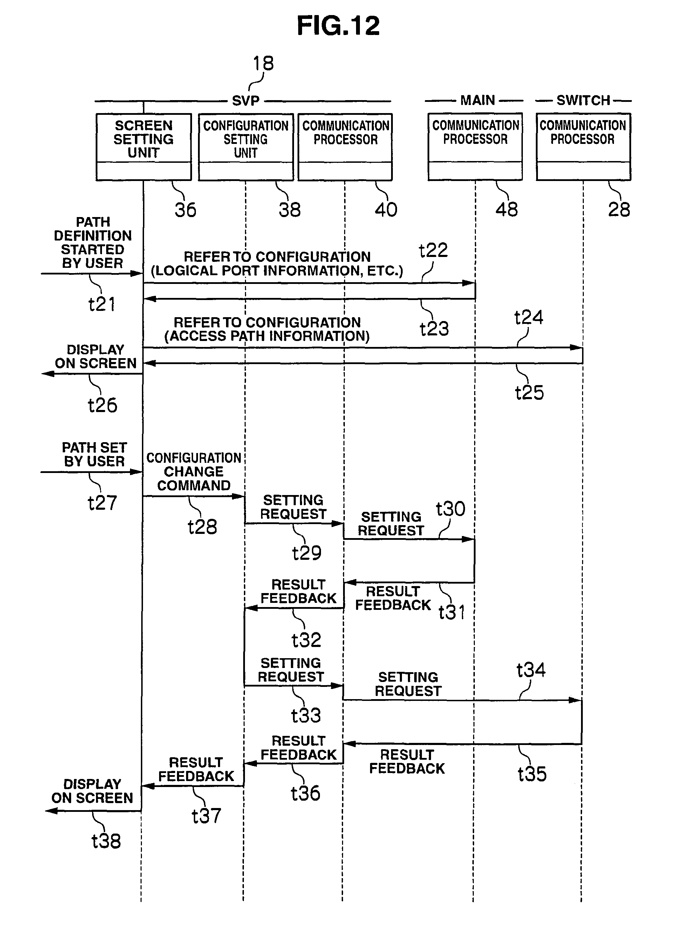

Next, path definition processing between the management terminal 18 and the storage device 20/the switch 16 will be described based on the time chart shown in Fig. 12. First, when path definition is started by the user at time t21, the management terminal 18 refers to the communication processor 48 in the storage device 20 for configuration (logical port information, etc.) on, based on the processing in the microprocessor (controller) 30, at time t22. Then information from the storage device 20 is transmitted back to the management terminal 18 at time t23.

Next, the management terminal 18 refers to the communication processor 28 in the switch 16 for configuration (access path information), based on the processing in the microprocessor (controller) 30, at time t 24. When the information from the switch 16 is transmitted back to the management terminal 18 at time t25, the content of the transmitted information is displayed on the screen of the management terminal 18 at time t26.

Then when the user performs path setting at time t27, a configuration change command is output from the screen setting unit 36 to the configuration setting unit 38 at time t28, a setting request is output from the configuration setting unit 38 to the communication processor 40 at time t29, and the setting request is output from the communication processor 40 to the storage device 20 at time t30. When the processing result is transmitted from the storage device 20 to the communication processor 40 at time t31, this result is transmitted from the communication processor 40 to the configuration setting unit 38 at time t32.

When the setting request is transmitted from the configuration setting unit 38 to the communication processor 40 at time t33, the setting request is output from the communication processor 40 to the communication processor 28 in the switch 16 at time t34. Then the processing result from the switch 16 is transmitted back to the setting screen unit 36 at times t35 to t37, and the content of the processing result is displayed on the screen of the management terminal 18 at time t38.

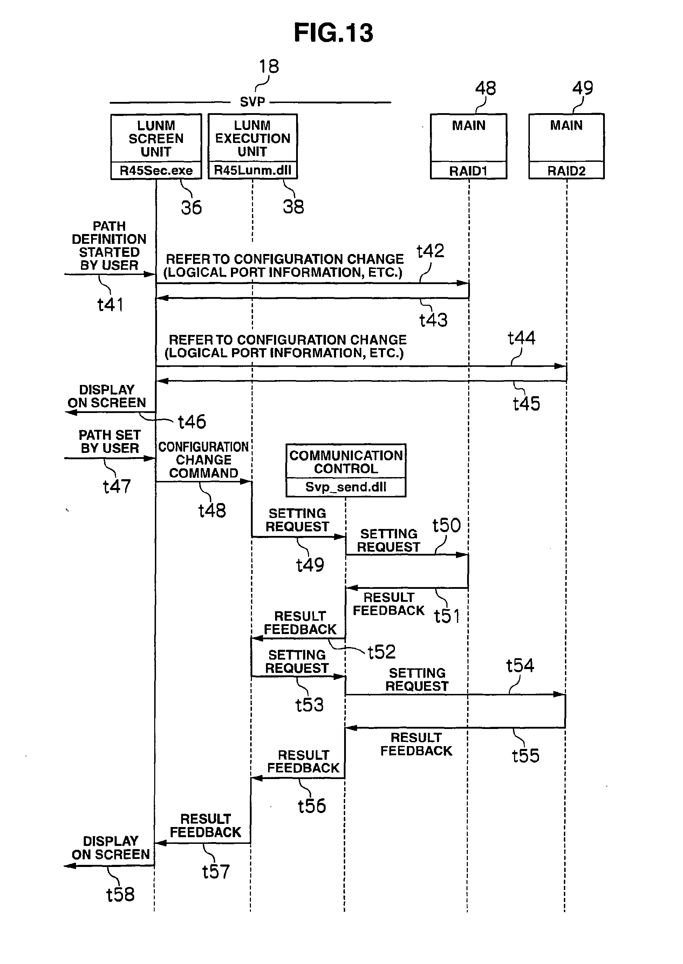

Next, path definition information processing between the management terminal 38 and the storage device 20/strorage device 21 will be described based on the time chart shown in Fig. 13. In this embodiment, after the path definition is started by the user at time t41, the communication processor 48 in the storage device 20 is referred to for the configuration change (logical port information, etc) at time t42, the content of the configuration change is transmitted back to the management terminal 18 at time t43, the communication processor 49 in the storage device 21 is referred to for the configuration change (logical port information) at time t44, and the content of the configuration change is transmitted back to the management terminal 18 at time t45. The successive processing from time t46 to time t58 is same as the processing from time t28 to time t38 shown in Fig. 12 except that the object on which the management terminal 18 performs the above processing is partly changed from the switch 16 to the storage 21.

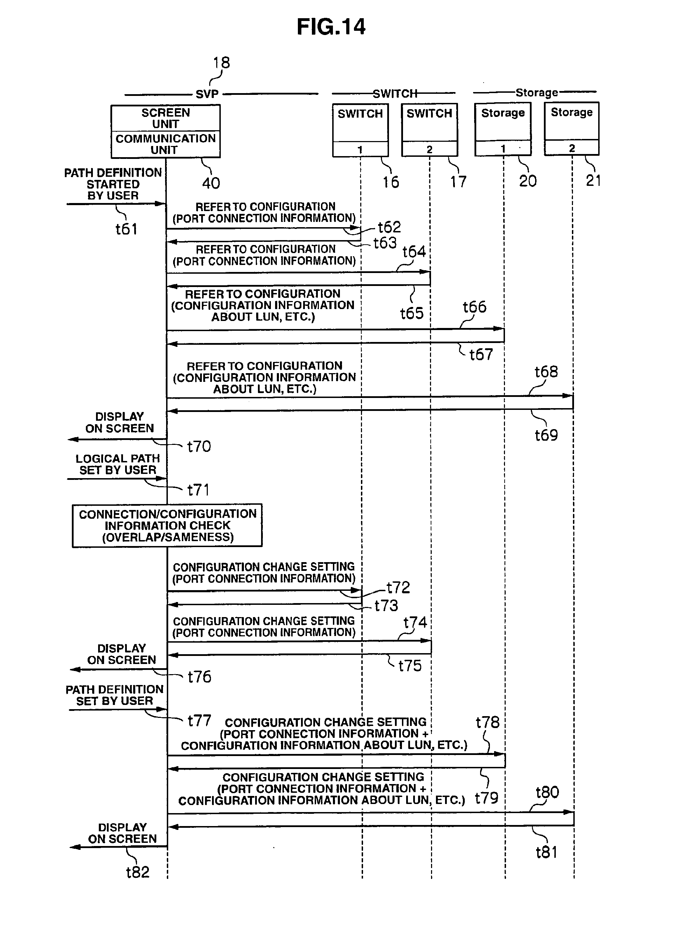

Next, path definition processing between the management terminal 18, the plurality of switches 16 and 17, and the plurality of storage devices 20 and 21 will be described based on the time chart shown in Fig. 14. First when path definition is started by the user at time t61, the management terminal 18 refers to the switch 16 for a configuration (port connection information), and the result is transmitted from the switch 16 to the management terminal 18 at time t63. Next, the management terminal 18 refers to the switch 17 for a configuration (port connection information) at time t64, and the result is transmitted back from the switch 17 to the management terminal at time t65.

Next, the management terminal 18 refers to the storage device 20 for a configuration (logical unit number and other configuration information) at time t66, and the result is transmitted back from the storage device 20 to the management terminal 18 at time t67. Then the management terminal 18 refers to the storage device 21 for a configuration (logical unit number and other configuration information) at time t68, and the result is transmitted back from the storage device 21 to the management terminal 18 at t69.

Next, the management terminal 18 displays the content of the transmitted information on the screen at time t70, and when setting for a logical path is performed by the user at time t71, the microprocessor 30 in the management terminal 18 checks configuration/configuration information (i.e., overlap/sameness). Then the management terminal 18 performs configuration change setting (port connection information) processing on the switch 16 at time t72 based on the check result, and the processing result is transmitted from the switch t16 to the management terminal 18 at time t73. Next, the management terminal 18 performs configuration change setting (port connection information) processing on the switch 17 at time t74, and the processing result is transmitted back from the switch 17 to the management terminal 18 at time t75. The management terminal 18 displays the content transmitted at time t76 on the screen.

Next, when the user sets path definition at time t77, the management terminal 18 performs configuration change setting (port connection information, logical unit number and other information) processing on the storage device 20 at time t78, and the processing result is transmitted back from the storage device 20 to the management terminal 18 at time t79. Then the management terminal 18 performs configuration change setting (port connection information, logical unit number and other information) processing on the storage device 21 at time t80, and the processing result is transmitted back from the storage device 21 to the management terminal 18 at time t81. The management terminal 18 displays the content transmitted at time t82 on the screen.

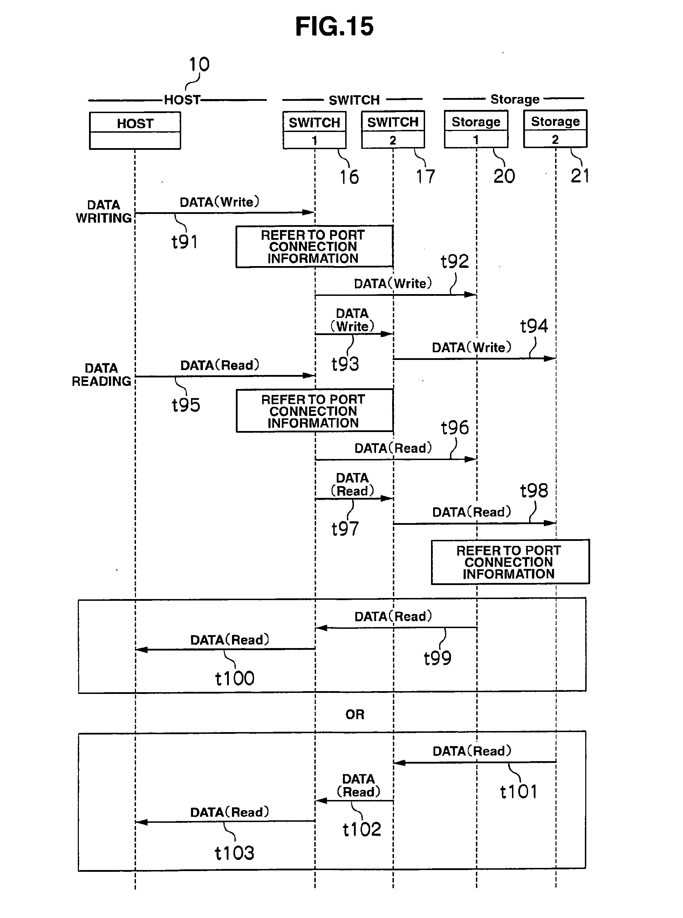

Next, data read/write processing between the host computer 10, the switches 16 and 17, and the storage devices 20 and 21 will be described based on the time chart shown in Fig. 15. First, when performing data writing, the host computer 10 accesses the switch 16 at time t91, refers to the port connection information, and performs data write processing on the storage 20 at time t92. Then when the data write processing is transferred to the switch 17 at time t93, the host computer 10 performs data write processing on the storage device 21 at time t94.

When performing data reading, the host computer 10 performs data read processing on the switch 16 at time t95, refers to the port connection information, and then reads data from the storage device 20 based on the reference result at time t96. Then the host computer 10 performs data read processing on the switch 17 at time t97, refers to the port connection information, and then reads data from the storage device 21 based on the reference result at time t98. When the host computer 10 reads read data from the storage device 20, it loads that data into the switch 16 at time t99, and acquires the data via the via the switch 16 at time t100. When the host computer 10 reads read data from the storage device 21, it loads the data into the switch 17 at time t101 and acquires the data via the switch 16 at times t102 and t103.

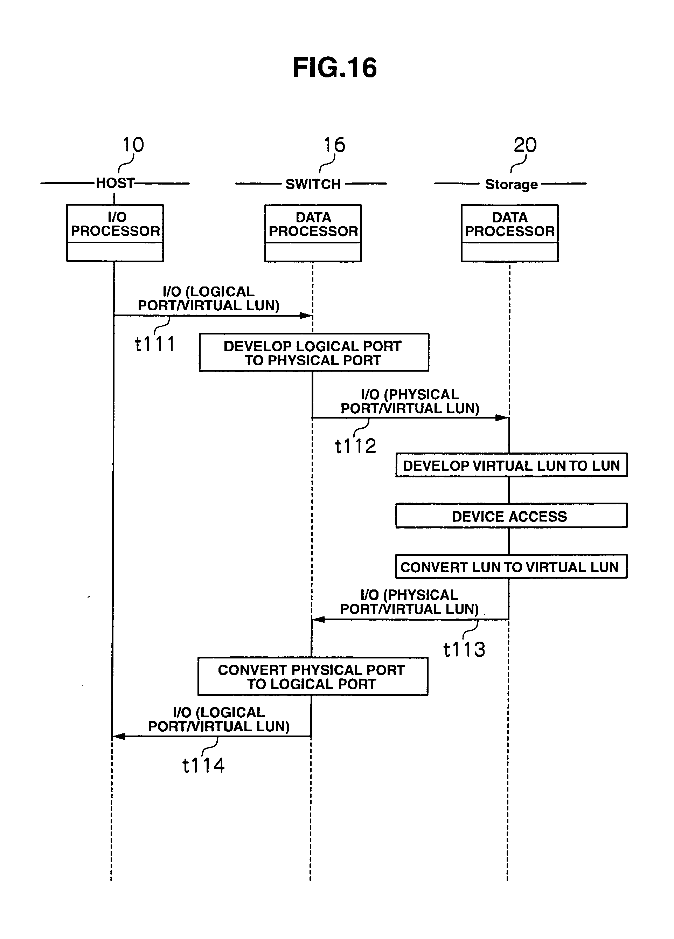

Next, I/O transfer processing between the host computer 10 and the switch 16/storage device 20 will be described with reference to the time chart shown in Fig. 16. First, the host computer 10 transfers, for example, data regarding the logical port/the virtual logical unit number as I/O information to the switch 16 at time t111. Then processing for developing the logical port to a physical port is performed in the data control unit 26 in the switch 16, and the developed data is transferred to the storage device 20 at time t112. The data control unit 50 in the storage device 20 performs processing for developing the virtual logical unit number to the logical unit number, accesses the logical device 46 to perform processing for converting the logical unit number to the virtual logical unit number, and transfers the processing result to the switch 16 at time t113. The data control unit 26 in the switch 16 performs processing for converting the physical port to the logical port based on the data regarding the I/O information (physical port/ virtual logical unit number) received from the storage device 20, and transfers the processing result to the host computer 10 at time t114.

According to this embodiment, since path definition information is set for the logical port L1 that is obtained by logically integrating a plurality of physical ports in the storage apparatus 14 into a single port so that information is accurately transferred from the host computer 10 to the logical device 46 in the storage device 20, the operation accompanied by the setting of the path definition information can be simplified.

In addition, according to this embodiment, since the access paths from the switch 16 having the plurality of switch ports to the logical device 46 in the storage device 20 are integrated into a single access path and the entrance of this access path is provided to the host computer 10 as a single logical port L1, the setting and management for the access path from the host computer 10 can be easily performed.

While the invention has been described with respect to a limited number of embodiments, those skilled in the art, having benefit of this disclosure, will appreciate that other embodiments can be devised that do not depart from the scope of the invention as disclosed herein. Accordingly, the scope of the invention should be limited only by the attached claims.

## Claims

1. A storage apparatus (14) that includes: a storage device (20) for storing information; a plurality of physical ports (P11, P21, P22) that is connected to a host computer (10) via a communication network (12) and constitutes interfaces for a logical unit in the storage device (20); and a storage controller (26) for controlling data read and data write relative to the storage device (20), comprising:
a setting apparatus that associates an access path group for connecting each physical port and the logical unit (46) in the storage device (20) to each other with a logical port (L1) obtained by integrating the plurality of physical ports (P11, P21, P22) into a single port, and sets them as path definition information indicating control information for accurately transferring information from the host computer (10) to the logical unit (46) in the storage device (20), the setting apparatus providing the host computer (10) with information indicating that the logical port (L1) that has been set by the setting apparatus is an access entrance for the host computer (10).

2. The storage apparatus (14) according to claim 1, wherein the path definition information includes: connection information indicating the connection relationship between the logical port and each access path in the access path group; a host name for identifying the host computer (10); and a host mode for identifying a mode of the host computer (10).

3. The storage apparatus (14) according to claim 1, wherein:
the setting apparatus includes: a display apparatus (36) for displaying an image; and a controller for controlling an image displayed on the display apparatus in response to input information resulting from manipulation;
the display apparatus (36) displays on a screen the access path group for connecting each physical port and the logical unit (46) in the storage device (20) to each other;
the controller judges, when, as input information resulting from manipulation, one access path is designated from the access path group displayed on the screen and a logical port name to be set for the designated access path is input, sameness regarding whether or not an access path for the logical device (46) the same as the logical device (46) connected to the designated access path is selected, displays the designated access path and the logical device (46) connected to the designated access path on the screen only when the judgment result shows that the selected access path satisfies is the same, and sets, when setting permission for the displayed information is input, the entrance of the selected access path to be the logical port (L1).

4. A storage apparatus (14) that includes: a switch that is connected to a host computer (10) via a communication network and defines a path group for connecting a plurality of switch ports to each other; a storage device for storing information; a plurality of physical ports that is connected to the communication network via the switch and constitute interfaces for a logical unit in the storage device; and a storage control unit for controlling data write and data read relative to the storage device, comprising:
a setting apparatus that associates an access path group for connecting each switch port in the switch and the logical unit (46) in the storage device (20) to each other with a logical port (L1) obtained by integrating each switch port in the switch (16) and each physical port in the storage device (20) into a single port and sets them as path definition information indicating control information for accurately transferring information from the host computer to the logical unit (46) in the storage device (20), the setting apparatus providing the host computer (10) with information indicating that the logical port (L1) that has been set by the setting apparatus is an access entrance for the host computer (10).

5. The storage apparatus (14) according to claim 4, wherein the path definition information includes: connection information indicating the connection relationship between the logical port (L1) and each access path in the access path group; a host name for identifying the host computer (10); and a host mode for identifying a mode of the host computer (10).

6. The storage apparatus (14) according to claim 4, wherein:
the setting apparatus includes: a display apparatus (36) for displaying an image; and a controller for controlling an image displayed on the display apparatus in response to input information resulting from manipulation;
the display apparatus (36) displays on a screen the access path group for connecting each switch port and the logical unit (46) in the storage device (20) to each other;
the controller judges, when, as input information resulting from manipulation, one access path is designated from the access path group displayed on the screen and a logical port name to be set for the designated access path is input, sameness regarding whether or not an access path for the logical device (46) the same as the logical device (46) connected to the designated access path is selected, displays the designated access path and the logical device (46) connected to the designated access path on the screen only when the judgment result shows that the selected access path is the same, and sets, when setting permission for the displayed information is input, the entrance of the selected access path to be the logical port (L1).

7. A storage system that includes: one or more host computers (10); and one or more storage apparatuses (14) each exchanging information with the host computer(s) (10) via a communication network, the storage apparatus (14) including:
a storage device (20) for storing information; a plurality of physical ports (P11, P21, P22) that is connected to the host computer(s) (10) via a communication network and constitutes interfaces for a logical unit (46) in the storage device (20); and a storage controller for controlling data-read and data-write relative to the storage device (20), wherein
the storage apparatus (14) includes a setting apparatus that associates an access path group for connecting each physical port and the logical unit (46) in the storage device (20) to each other with a logical port (L1) obtained by integrating the plurality of physical ports into a single port (16) and sets them as path definition information indicating control information for accurately transferring information from the host computer (10) to the logical unit (46) in the storage device (20), the setting apparatus providing the host computer (10) with information indicating that the logical port (L1) that has been set by the setting apparatus is an access entrance for the host computer (10).

8. The storage apparatus (14) according to claim 7, wherein the path definition information includes: connection information indicating the connection relationship between the logical port (L1) and each access path in the access path group; a host name for identifying the host computer (10); and a host mode for identifying a mode of the host computer (10).

9. The storage apparatus (14) according to claim 7, wherein:
the setting apparatus includes: a display apparatus (36) for displaying an image; and a controller for controlling an image displayed on the display apparatus (36) in response to input information resulting from manipulation;
the display apparatus (36) displays on a screen the access path group for connecting each physical port and the logical unit (46) in the storage device (20) to each other;
the controller judges, when, as input information resulting from manipulation, one access path is designated from the access path group displayed on the screen and a logical port name to be set for the designated access path is input, sameness regarding whether or not an access path for the logical device (46) the same as the logical device (46) connected to the designated access path is selected, displays the designated access path and the logical device (46) connected to the designated access path on the screen only when the judgment result shows that the selected access path is the same, and sets, when setting permission for the displayed information is input, the entrance of the selected access path to be the logical port (L1).

10. A storage system that includes: one or more host computers (10); and one or more storage apparatuses (14) each exchanging information with the host computer(s) (10) via a communication network, the storage apparatuses (14) each including: a switch that is connected to the host computer(s) (10) via a communication network and defines a path group for connecting a plurality of switch ports to each other; a storage device (20) for storing information; a plurality of physical ports that is connected to the communication network via the switch (16) and constitute interfaces for a logical unit (46) in the storage device (20); and a storage control unit for controlling data write and data read relative to the storage device (20), wherein:
the storage apparatus (14) includes a setting apparatus that associates an access path group for connecting each switch port in the switch and the logical unit in the storage device to each other with a logical port obtained by integrating each switch port in the switch (16) and each physical port in the storage device (20) into a single port and sets them as path definition information indicating control information for accurately transferring information from the host computer (10) to the logical unit (46) in the storage device (20), the setting apparatus providing the host computer (10) with information indicating that the logical port (L1) that has been set by the setting apparatus is an access entrance for the host computer (10).

11. The storage apparatus (14) according to claim 10, wherein the path definition information includes: connection information indicating the connection relationship between the logical port (L1) and each access path in the access path group; a host name for identifying the host computer (10); and a host mode for identifying a mode of the host computer (10).

12. The storage apparatus according to claim 10, wherein:
the setting apparatus includes: a display apparatus (36) for displaying an image; and a controller for controlling an image displayed on the display apparatus (36) in response to input information resulting from manipulation;
the display apparatus (36) displays on a screen the access path group for connecting each switch port and the logical unit (46) in the storage device (20) to each other;
the controller judges, when, as input information resulting from manipulation, one access path is designated from the access path group displayed on the screen and a logical port name to be set for the designated access path is input, sameness regarding whether or not an access path for the logical device (46) the same as the logical device (46) connected to the designated access path is selected, displays the designated access path and the logical device (46) connected to the designated access path on the screen only when the judgment result shows that the selected access path is the same, and sets, when setting permission for the displayed information is input, the entrance of the selected access path to be the logical port (L1).

13. A path information setting method for setting path information for a storage apparatus (14) that includes: a storage device (20) for storing information; a plurality of physical ports (P11, P21, P22) that is connected to a host computer (10) via a communication network and constitutes interfaces for a logical unit (46) in the storage device (20); and a storage controller for controlling data read and data write relative to the storage device (20), the storage apparatus (14) including a setting apparatus that sets path definition information indicating control information for accurately transferring information from the host computer (10) to the logical unit (46) in the storage device (20), the method comprising the steps performed by the setting unit:
associating, as the path definition information, an access path group for connecting each physical port and the logical unit (46) in the storage device (20) to each other with a logical port (L1) obtained by integrating the plurality of physical ports into a single port (16); and
providing the host computer (10) with information indicating that the set logical port (L1) is an access entrance for the host computer (10).

14. The path information setting method according to claim 13, wherein the setting apparatus includes: a display apparatus (36) for displaying an image; and a controller for controlling an image displayed on the display apparatus in response to input information resulting from manipulation,
wherein the display apparatus (36) executes a step of displaying on a screen the access path group for connecting each physical port and the logical unit (46) in the storage device (20) to each other, and
wherein the controller executes the steps of:
judging, when, as input information resulting from manipulation, one access path is designated from the access path group displayed on the screen and a logical port name to be set for the designated access path is input, sameness regarding whether or not an access path for the logical device (46) the same as the logical device (46) connected to the designated access path is selected;
displaying the designated path and the logical device (46) connected to the designated access path on the screen only when the judgment result shows that the selected access path is the same; and
setting, when setting permission for the displayed information is input, the entrance of the selected access path to be the logical port (L1).

15. A path information setting method for setting path information for a storage apparatus (14) that includes: a switch (16) that is connected to a host computer (10) via a communication network and defines a path group for connecting a plurality of switch ports to each other; a storage device (20) for storing information; a plurality of physical ports (P11, P21, P22) that is connected to the communication network via the switch (16) and constitute interfaces for a logical unit (46) in the storage device (20); and a storage control unit for controlling data write and data read relative to the storage device, the storage apparatus (14) including a setting apparatus that sets path definition information indicating control information for accurately transferring information from the host computer (10) to the logical unit (46) in the storage device (20), wherein
the setting apparatus executes steps of:
associating, as the path definition information, an access path group for connecting each switch port in the switch and the logical unit (46) in the storage device (20) to each other with a logical port (L1) obtained by integrating each switch port in the switch and each physical port in the storage device into a single port (16); and
providing the host computer (10) with information indicating that the set logical port is an access entrance for the host computer (10).

16. The path information setting method according to claim 15, wherein the setting apparatus includes: a display apparatus (36) for displaying an image; and a controller for controlling an image displayed on the display apparatus (36) in response to input information resulting from manipulation,
wherein the display apparatus (36) executes a step of displaying on a screen the access path group for connecting each physical port and the logical unit (46) in the storage device (20) to each other, and
wherein the controller executes the steps of:
judging, when, as input information resulting from manipulation, one access path is designated from the access path group displayed on the screen and a logical port name to be set for the designated access path is input, sameness regarding whether or not an access path for the logical device (46) the same as the logical device (46) connected to the designated access path is selected;
displaying the designated access path and the logical device (46) connected to the designated access path on the screen only when the judgment result shows that the selected access path is the same; and
setting, when setting permission for the displayed information is input, the entrance of the selected access path to be the logical port L1).
